(19) Europäisches Patentamt
European Patent Office
Office européen des brevets

(11) **EP 3 120 124 B1**

(12) **FASCICULE DE BREVET EUROPEEN**

(45) Date de publication et mention de la délivrance du brevet:
**11.04.2018   Bulletin 2018/15**

(21) Numéro de dépôt: **15713994.0**

(22) Date de dépôt: **09.03.2015**

(51) Int Cl.:
*G01L 5/22* *(2006.01)*     *B62D 5/04* *(2006.01)*
*G01M 17/06* *(2006.01)*

(86) Numéro de dépôt international:
**PCT/FR2015/050572**

(87) Numéro de publication internationale:
**WO 2015/140447 (24.09.2015 Gazette 2015/38)**

(54) **MODÉLISATION DU FROTTEMENT DANS UNE DIRECTION ASSISTÉE PAR UN NUAGE DE POINTS**

MODELLIERUNG DER REIBUNG BEI EINER ASSISTIERTEN LENKUNG ANHAND VON PUNKTSTREUUNG

MODELLING OF THE FRICTION IN AN ASSISTED STEERING USING A SCATTER OF POINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.03.2014   FR 1452216**

(43) Date de publication de la demande:
**25.01.2017   Bulletin 2017/04**

(73) Titulaire: **Jtekt Europe**
**69540 Irigny (FR)**

(72) Inventeurs:
• **BOURDREZ, Sébastien**
  **F-69510 Yzeron (FR)**
• **MOULAIRE, Pascal**
  **F-69890 La Tour De Salvagny (FR)**
• **RAVIER, Christophe**
  **F-69780 Saint Pierre De Chandieu (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A2- 2 239 180      WO-A2-2009/133534
DE-A1- 10 206 474     DE-A1-102008 021 848**

**Description**

La présente invention concerne le domaine général des procédés de gestion de directions assistées équipant des véhicules, et notamment des véhicules automobiles.

Elle concerne plus particulièrement la prise en considération des efforts de frottements dans un mécanisme de direction assistée.

La présence, dans un mécanisme de direction, de frottements mécaniques entre les organes constitutifs dudit mécanisme de direction, peut affecter les mouvements relatifs desdits organes, perturber la régulation de l'assistance de direction, et engendrer des phénomènes parasites au niveau du volant de conduite.

Il peut donc être utile de détecter et de quantifier ces frottements internes, propres au mécanisme de direction, afin par exemple de compenser lesdits frottements dans le but d'améliorer le confort de conduite et/ou de procurer au conducteur un ressenti fidèle et intuitif des réactions de la direction.

Or, il est particulièrement difficile de déterminer avec précision les frottements, et ce d'autant plus que lesdits frottements évoluent dans le temps, en fonction notamment du vieillissement ou du degré d'usure des organes de direction, ou bien encore en fonction des conditions environnementales d'utilisation du véhicule (on comprendra, par exemple, que le frottement tend à augmenter par temps froid, en raison notamment de l'augmentation de viscosité des lubrifiants). Des procédés d'évaluation des frottements dans un mécanisme de direction assistée de l'art antérieure sont divulgués dans les documents WO2009133534, DE102008021848, DE10206474 et EP2239180. Les objets assignés à l'invention visent par conséquent à remédier aux inconvénients susmentionnés et à proposer un nouveau procédé d'évaluation de frottements qui permette de déterminer de façon précise, simple, avec une grande fiabilité, et à tout moment, les frottements affectant une direction assistée, et ce pour une large gamme de situations de vie du mécanisme de direction.

Les objets assignés à l'invention sont atteints au moyen d'un procédé d'évaluation des frottements dans un mécanisme de direction assistée équipé d'un moteur d'assistance destiné à fournir un effort d'assistance pour manoeuvrer ledit mécanisme de direction, ledit procédé étant caractérisé en ce qu'il comporte une étape (a) d'acquisition d'une série de points de caractérisation, au cours de laquelle on mesure, pour plusieurs valeurs différentes prises successivement par l'effort d'assistance au cours du fonctionnement du mécanisme de direction, les valeurs de frottement correspondantes, afin d'obtenir empiriquement une série de points de caractérisation distincts qui associent chacun à une valeur mesurée représentative de l'effort d'assistance une valeur mesurée de frottement, puis une étape (b) de construction d'un modèle de frottement empirique, au cours de laquelle on établit une loi de corrélation entre les points de caractérisation constitutifs de la série de points de caractérisation, à partir du nuage de points formé par ladite série desdits points de caractérisation.

Avantageusement, en construisant un modèle de frottement à partir d'une pluralité (d'un nuage) de points de caractérisation expérimentaux distincts, relevés en plusieurs valeurs différentes de l'effort d'assistance, l'invention permet de réaliser une cartographie complète et fidèle du phénomène de frottement, qui couvre, de manière fiable, une large plage d'efforts d'assistance, et donc, plus globalement, un large domaine de situations de vie du mécanisme de direction (situations de vie qui sont caractérisées ici par l'effort d'assistance appliqué à l'instant considéré).

L'invention permet avantageusement de prendre simultanément en considération, pour établir le modèle de frottement applicable à un instant considéré, un ensemble de plusieurs points de caractérisation qui ont été obtenus chacun par la mesure, et qui sont donc tous effectivement représentatifs du comportement réel des frottements dans la direction sur une période de temps considérée, qui précède immédiatement l'instant auquel on souhaite estimer le frottement.

La multiplicité des points de caractérisation utilisés, et plus particulièrement, l'étalement (la répartition) de ces points de caractérisation sur une large plage de valeurs d'effort d'assistance, garantit la représentativité et la validité du modèle, au moins sur ladite large plage de répartition, voire au-delà (par extrapolation), c'est-à-dire garantit la fiabilité et la justesse dudit modèle pour une large plage de situations de vie du mécanisme de direction.

Cette multiplicité des points de caractérisation permet en outre une définition de la loi de corrélation à partir de données redondantes, ce qui rend ladite définition de la loi de corrélation, et donc la définition du modèle qui en résulte, peu sensible au bruit et aux erreurs de mesure qui sont susceptibles d'affecter la détermination de l'un ou l'autre point de caractérisation.

La définition du modèle selon l'invention est donc particulièrement robuste.

De surcroît, la nature expérimentale (empirique) de la construction du modèle selon l'invention, qui minimise les risques d'erreurs (d'écart) entre le frottement réel et le frottement estimé à partir dudit modèle, garantit avantageusement que ledit modèle est très représentatif (très proche) du comportement réel du mécanisme de direction.

Par ailleurs, en sus de l'acquisition de la série de points de caractérisation, l'invention rend possible le renouvellement périodique de ladite série de points de caractérisation, ce qui permet de disposer à tout instant d'un nuage rafraîchi de points de caractérisation expérimentaux, si bien que l'invention permet de garantir durablement la représentativité du modèle de frottement dans le temps.

En d'autres termes, l'invention permet avantageusement d'intégrer automatiquement et intrinsèquement à la construction du modèle, au fil du temps, les effets du vieillissement ou de l'usure du mécanisme de direction, ainsi que les fluctuations des conditions externes (par exemple de température) affectant le fonctionnement dudit mécanisme, ce qui permet d'adapter sensiblement en temps réel ledit modèle, pour que ledit modèle reflète en permanence le comportement réel du mécanisme de direction.

A partir du modèle empirique ainsi construit, et de préférence mis à jour régulièrement, il est possible d'estimer de façon réaliste, et à tout instant, le frottement à partir d'une valeur connue (mesurée) d'effort d'actionnement.

Pour l'ensemble des raisons susmentionnées, l'invention accroît avantageusement la fiabilité de l'estimation des frottements internes de la direction, en éliminant notamment, par une construction expérimentale du modèle qui est étalée à la fois dans l'espace (sur une plage de valeurs d'effort d'assistance) et dans le temps (sur une durée qui est nécessaire à l'acquisition de l'ensemble des points de la série de points de caractérisation, et qui, grâce au rafraîchissement, peut rester quasi-contemporaine de l'instant auquel le modèle est utilisé pour estimer un frottement), les erreurs d'approximation dont serait immanquablement entaché un modèle de frottement purement théorique, dont l'étalonnage reposerait entièrement sur un unique point de mesure instantané.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, sur un diagramme qui exprime le frottement (en ordonnées) en fonction d'une variable (en abscisse) représentative de l'effort d'assistance, et plus particulièrement en fonction de l'effort d'actionnement total correspondant au cumul de l'effort d'assistance délivré par le moteur et de l'effort manuel exercé par le conducteur sur le volant de conduite, un exemple de nuage de points de caractérisation obtenus selon l'invention, ainsi qu'une loi de corrélation correspondante, établie conformément à l'invention.

La figure 2 représente, sur un diagramme temporel, l'évolution conjointe d'un signal représentatif de l'effort d'assistance et d'un signal représentatif de la position angulaire du volant de conduite, afin d'illustrer le principe de chute de la valeur représentative de l'effort d'assistance que l'on observe lors d'inversions de braquage.

La figure 3 est une vue de détail agrandie d'une portion de la figure 2.

La figure 4 représente schématiquement la mise en oeuvre d'un procédé conforme à l'invention.

L'invention concerne un procédé d'évaluation des frottements dans un mécanisme de direction assistée 1.

Ledit mécanisme de direction assistée 1 est équipé d'un moteur d'assistance 2 destiné à fournir un effort d'assistance $C_{assist}$ pour manoeuvrer ledit mécanisme de direction.

On peut indifféremment envisager tout type de moteur d'assistance 2, et plus particulièrement tout type de moteur d'assistance à double sens de fonctionnement.

En particulier, l'invention peut tout aussi bien s'appliquer à un moteur d'assistance 2 rotatif, destiné à exercer un effort d'assistance $C_{assist}$ de type couple, qu'à un moteur d'assistance 2 linéaire, destiné à exercer un effort d'assistance $C_{assist}$ de type traction ou compression.

Par ailleurs, ledit moteur d'assistance 2 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 2 sera un moteur électrique rotatif, par exemple de type « brushless ».

Par ailleurs, le mécanisme de direction assistée 1 comprend de préférence, de manière connue en soi, un volant de conduite 3 par lequel le conducteur du véhicule peut entraîner en rotation une colonne de direction 4 qui engrène, au moyen d'un pignon 5, sur une crémaillère de direction 6 montée coulissante dans un carter de direction solidaire du châssis du véhicule.

Les extrémités de la crémaillère de direction 6 sont de préférence reliées chacune, par l'intermédiaire d'une biellette de direction 7, 8, à un porte-fusée orientable en lacet, sur lequel est monté une roue directrice (et préférentiellement motrice) 9, 10 du véhicule, de telle manière que le déplacement de la crémaillère 6 en translation dans le carter provoque une modification de l'angle de braquage (i.e. de l'orientation en lacet) desdites roues directrices 9, 10.

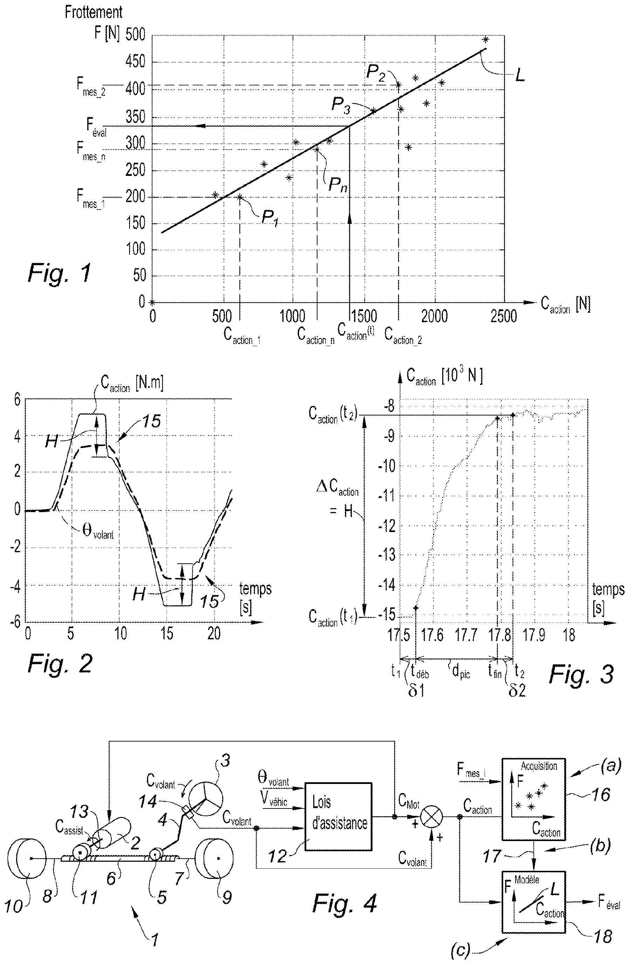

Le moteur d'assistance 2 peut venir en prise sur la colonne de direction 4, par exemple par l'intermédiaire d'un réducteur à roue tangente et vis sans fin, ou bien encore venir en prise directement sur la crémaillère de direction 6, par un mécanisme d'entraînement de type vis à billes ou bien *via* un pignon moteur 11 distinct du pignon 5 de la colonne de direction (pour former alors un mécanisme de direction dit « à double pignon », tel que schématisé sur la figure 4).

La consigne d'effort (ou, plus préférentiellement, la consigne de couple) $C_{Mot}$ qui est appliquée au moteur d'assistance 2 afin que ledit moteur assiste le conducteur dans la manoeuvre du mécanisme de direction 1 dépend de lois d'assistance prédéterminées, stockées dans une mémoire non volatile d'un calculateur (ici un module d'application de lois d'assistance 12), lesdites lois d'assistance pouvant ajuster ladite consigne d'effort $C_{Mot}$ en fonction de divers paramètres tels que le couple volant $C_{volant}$ exercé par le conducteur sur le volant de conduite 3, la vitesse (longitudinale)

$V_{véhic}$ du véhicule, la position angulaire $\theta_{volant}$ du volant de conduite 3, etc.

Selon l'invention, le procédé comporte une étape (a) d'acquisition d'une série de points de caractérisation $P_1$, $P_2$, ... $P_n$, au cours de laquelle on mesure, pour plusieurs valeurs différentes prises successivement par l'effort d'assistance $C_{assist}$ au cours du fonctionnement du mécanisme de direction, les valeurs de frottement correspondantes, afin d'obtenir empiriquement une série de points de caractérisation $P_1$, $P_2$, ... $P_n$ distincts qui associent chacun à une valeur mesurée $C_{action\_1}$, $C_{action\_2}$, ... $C_{action\_n}$ représentative de l'effort d'assistance une valeur mesurée de frottement $F_{mes\_1}$, $F_{mes\_2}$, ... $F_{mes\_n}$, tel que cela est illustré sur la figure 1.

En d'autres termes, on acquiert une série de $n$ points de caractérisation, tels que, pour $i$ entier allant de 1 à $n$ : $Pi = (C_{action\_i}, F_{mes\_i})$, l'indice $i = 1$ à $n$ indiquant ici, par simple convention, l'ordre chronologique d'acquisition desdits points de caractérisation.

Avantageusement, l'invention permet d'acquérir, par la mesure, une pluralité de points de caractérisation $P_1$, $P_2$, ... $P_n$ qui sont répartis sur toute une plage de valeurs d'effort.

Cette plage (non limitée à une seule valeur) couvre plusieurs valeurs représentatives de l'effort d'assistance, et couvre donc, plus globalement, différents états possibles du mécanisme de direction 1, et notamment différents états de contrainte du mécanisme de direction 1 liés à la manoeuvre (volontaire) dudit mécanisme de direction, états auxquels sont associés respectivement différents niveaux de frottement interne.

L'invention fournit donc un intervalle large de définition du modèle de frottement, intervalle au sein duquel (et le cas échéant au voisinage duquel) la définition du modèle sera particulièrement fiable, car encadrée par des valeurs expérimentales mesurées, représentatives du comportement réel du mécanisme de direction.

Dans l'absolu, on pourra choisir comme première variable de définition des points de caractérisation (c'est-à-dire, sur la figure 1, comme variable d'abscisse), dite « représentative de l'effort d'assistance $C_{assist}$ », tout paramètre qui reflète un état du mécanisme de direction que l'on peut corréler, de manière déterministe, à l'intensité des frottements internes.

L'objectif poursuivi est en effet, *in fine*, de pouvoir construire un modèle capable d'évaluer les frottements (données de sortie du modèle) de façon fiable, à partir de la seule connaissance de la valeur prise, à l'instant considéré, par cette première variable (donnée d'entrée appliquée au modèle).

En pratique, l'effort d'assistance $C_{assist}$ délivré par le moteur d'assistance 2 est généralement (très) supérieur à l'effort $C_{volant}$ exercé manuellement par le conducteur sur le volant 3.

Pour s'assurer que la première variable utilisée est effectivement représentative de l'état de contrainte du mécanisme de direction 1, on veillera donc de préférence à ce que ladite première variable prenne en considération (au moins) la contribution (majoritaire) dudit effort d'assistance $C_{assist}$ dans la définition de l'état de contrainte du mécanisme de direction.

De préférence, la valeur mesurée représentative de l'effort d'assistance est choisie parmi : la valeur de la consigne de couple moteur $C_{Mot}$ qui est appliquée au moteur d'assistance 2, la valeur mesurée du couple (électromagnétique) d'assistance $C_{assist}$ effectivement exercé par l'arbre de sortie 13 du moteur d'assistance 2, ou, ce qui correspond à la variante préférée illustrée sur la figure 4, la valeur mesurée du couple d'actionnement $C_{action}$ total qui correspond au cumul (somme algébrique) d'une part du couple d'assistance $C_{assist}$ délivré par le moteur d'assistance 2 et d'autre part du couple volant $C_{volant}$ qui est exercé par le conducteur sur le volant de conduite 3.

Ces valeurs présentent en effet le double avantage d'une part de contenir une information représentative de l'état de contrainte du mécanisme de direction 1, état de contrainte qui est lié à la manoeuvre (ou au maintien volontaire en position) dudit mécanisme de direction, dans la mesure où lesdites valeurs prennent notamment en considération la contribution de l'effort d'assistance $C_{assist}$ fourni par le moteur d'assistance, et d'autre part d'être disponibles sous forme de signaux facilement exploitables.

Ainsi, la valeur de consigne de couple moteur $C_{Mot}$ pourra être obtenue en sortie du module d'application de lois d'assistance 12.

Le couple électromagnétique d'assistance $C_{assist}$ pourra être fourni par un capteur de couple idoine, de préférence intégré au contrôleur du moteur d'assistance.

Le couple volant $C_{volant}$ pourra être obtenu par un capteur de couple volant 14 approprié, tel qu'un capteur magnétique de couple mesurant les déformations élastiques d'une barre de torsion placée entre le volant de conduite 3 et la colonne de direction 4.

En pratique, on remarquera que, dans les situations de vie envisagées pour le véhicule, la valeur de la consigne $C_{Mot}$ appliquée au moteur d'assistance 2, et la valeur de l'effort d'assistance $C_{assist}$ qui est effectivement fourni par ledit moteur d'assistance 2, sont extrêmement proches, voire égales, de telle sorte que ces deux signaux peuvent être utilisés de manière équivalente dans le cadre de l'invention (y compris, notamment, pour définir le couple d'actionnement total $C_{action}$).

C'est pourquoi, de façon préférentielle, et par commodité de description, on pourra assimiler dans ce qui suit le signal d'effort (de couple) d'assistance $C_{assist}$ délivré par le moteur d'assistance à la consigne d'effort (consigne de couple) $C_{Mot}$ appliquée au moteur d'assistance 2.

Par ailleurs, les inventeurs on constaté que l'intensité des frottements était notamment liée à, et plus particulièrement déterminable en fonction de, l'intensité de l'effort d'actionnement $C_{action}$ total qui est exercé sur le mécanisme de direction 1 en vue de manoeuvrer ledit mécanisme (et donc de diriger le véhicule), effort d'actionnement $C_{action}$ qui correspond ici au cumul (à la somme algébrique) de l'effort d'assistance (et plus particulièrement du couple d'assistance) $C_{assist}$ délivré par le moteur d'assistance 2 et de l'effort (et plus particulièrement du couple) volant $C_{volant}$ qui est exercé par le conducteur sur le volant de conduite 3.

Plus particulièrement, les inventeurs ont constaté que l'intensité des frottements internes représentait une fonction croissante dudit effort d'actionnement $C_{action}$, fonction croissante dont la pente était liée aux rendements mécaniques.

Le choix de l'effort d'actionnement $C_{action}$ comme première variable caractéristique des points de caractérisation, et plus globalement comme variable d'entrée du modèle, c'est-à-dire comme variable représentative de l'état du mécanisme de direction, est donc tout indiqué.

Par ailleurs, afin d'obtenir une modélisation du phénomène de frottement qui affecte le mécanisme de direction, et donc ensuite une évaluation du phénomène de frottement qui soit la plus précise et la plus complète possible, il est préférable d'utiliser, comme valeur représentative de l'état du mécanisme de direction, et donc comme valeur mesurée représentative de l'effort d'assistance $C_{action\_1}$, $C_{action\_2}$, ... $C_{action\_n}$, un signal d'effort qui englobe des effets des frottements sur une chaîne cinématique qui soit la plus longue et la plus complète possible, au sein du mécanisme de direction 1, et ce afin de prendre en considération le plus grand nombre possible de tronçons de la direction dans lesquels des frottements peuvent prendre naissance, et donc de négliger le moins de sources de frottement interne possible.

En d'autres termes, il est préférable de recueillir le ou les signaux d'efforts utiles dans des zones situées le plus en amont possible de chaque chaîne cinématique comprise entre un élément actionneur amont de la direction d'une part (à savoir respectivement le conducteur et le moteur d'assistance 2), et les organes effecteurs aval (biellettes 7, 8 et roues directrices 9, 10) d'autre part, afin que ces signaux englobent le maximum de frottements qui s'opposent à la manoeuvre de la direction, et en l'occurrence englobent l'ensemble des frottements qui prennent naissance dans toute la chaîne cinématique située en aval du ou des éléments actionneurs concernés.

En outre, il est également préférable de prendre en considération un signal d'effort qui tient compte non seulement de la contribution du moteur d'assistance 2, mais également de la contribution manuelle du conducteur, de sorte à ce que ledit signal d'effort soit représentatif de l'état (et donc du niveau de frottement) de l'ensemble du mécanisme de direction 1, aussi bien dans la portion "motorisée" dudit mécanisme (moteur d'assistance 2, réducteur, crémaillère 6...) que dans (tout ou partie de) la portion "manuelle", dite aussi portion "conducteur" , dudit mécanisme (volant de conduite 3, colonne de direction 4, liaison pignon 5/crémaillère 6...)

Pour ces raisons, le signal d'effort utilisé (en tant que « première variable » au sens décrit plus haut) sera de préférence, et judicieusement, le signal d'effort d'actionnement $C_{action}$ formé, tel que cela est illustré sur la figure 4, par la somme d'une part du signal de couple volant représentatif du couple volant $C_{volant}$ exercé par le conducteur sur le volant de conduite, et d'autre part du signal de consigne de couple moteur $C_{Mot}$ (considéré comme égal à l'effort d'assistance $C_{assist}$, comme indiqué plus haut).

On notera à ce titre que, en l'espèce, en mesurant le couple volant $C_{volant}$ au moyen du capteur de couple 14 mentionné plus haut, on prendra avantageusement en considération, pour ce qui est de la partie "manuelle" du mécanisme de direction 1, tous les frottements apparaissant en aval dudit capteur 14 (et plus particulièrement en aval de sa barre de torsion), et notamment les frottements qui naissent dans la liaison entre le pignon 5 fixé au tronçon inférieur de la colonne de direction et la crémaillère 6.

Par ailleurs, on notera que, en tenant compte le cas échéant du rapport d'entraînement entre le moteur d'assistance 2 et la crémaillère de direction 6, on peut indifféremment exprimer les signaux d'efforts, et notamment le signal d'effort d'actionnement $C_{action}$ ou le signal de consigne de couple moteur $C_{Mot}$, aussi bien sous forme d'un couple (moteur) que sous forme d'un effort linéaire équivalent (de crémaillère 6), sans modifier le principe général de l'invention.

Ainsi, à titre d'exemple, le signal d'effort d'actionnement $C_{action}$ est homogène à un couple (exprimé en N.m) sur la figure 2, et peut être converti, par commodité et par simple convention de représentation, sous la forme d'un effort linéaire équivalent, exprimé en Newtons (figure 1), et/ou, par exemple, en kilo-Newtons (figure 3).

Plus globalement, l'invention peut indifféremment utiliser des signaux et mesures représentatifs d'efforts linéaires (agissant en translation) ou représentatifs de couples (agissant en rotation).

Tel que cela est illustré sur la figure 1, la série de points de caractérisation $P_1$, $P_2$, ... $P_n$ peut avantageusement être classée, et/ou plus particulièrement représentée graphiquement, sous forme d'une cartographie en nuage de points.

A cet effet, il suffit de placer lesdits points de caractérisation $P_1$, $P_2$, ... $P_n$ dans un graphique en deux dimensions, avec en ordonnée le frottement $\underline{F}$, et en abscisse la première variable, représentative de l'état de sollicitation du mécanisme de direction 1.

Plus particulièrement, dans le cas présent, l'abscisse correspondra à l'effort d'actionnement $C_{action}$, qui est lui-même une grandeur dépendante et représentative de l'effort d'assistance $C_{assist}$, $C_{mot}$.

Suite à l'étape (a) d'acquisition d'une série de points de caractérisation, le procédé comporte une étape (b) de construction d'un modèle de frottement empirique, au cours de laquelle on établit une loi de corrélation $L$ entre les points de caractérisation $P_1$, $P_2$, ... $P_n$ constitutifs de la série de points de caractérisation, à partir du nuage de points formé par ladite série desdits points de caractérisation.

Avantageusement, du fait que l'on considère la série de points de caractérisation $P_1$, $P_2$, ... $P_n$ dans son ensemble, en tant que nuage de points de mesure expérimentaux, pour en tirer une loi de corrélation $L$, ladite loi de corrélation $L$ se fonde simultanément, à l'instant où elle est établie, sur plusieurs points de caractérisation, c'est-à-dire sur une pluralité de valeurs empiriques, qui reflètent fidèlement le comportement réel du mécanisme de direction.

En outre, l'acquisition des points de caractérisation $P_1$, $P_2$, ... $P_n$ s'est étalée dans le temps, pendant la période qui a précédé l'instant où l'on définit la loi de corrélation $L$ à partir desdits points de caractérisation, si bien que, par construction, ladite loi de corrélation $L$ tient parfaitement compte de l'historique (récent) du mécanisme de direction pour déterminer une tendance d'évolution des frottements en fonction de la première variable (ici, en fonction de l'effort d'actionnement $C_{action}$).

L'invention permet ainsi d'obtenir une loi de corrélation, et donc un modèle de frottement, particulièrement fiable et proche de la réalité.

Une fois la loi de corrélation $L$ établie, il est possible d'utiliser ladite loi comme modèle prédictif, généralisé et valable au-delà des seuls points de caractérisation $P_1$, $P_2$, ... $P_n$, pour évaluer, à un instant $t$ considéré, le frottement $F$, $F_{éval}$ qui affecte la manoeuvre du mécanisme de direction 1, à partir de la seule connaissance, juste nécessaire et suffisante, d'une valeur quelconque de la première variable (ici, à partir de la connaissance d'une valeur quelconque de l'effort d'actionnement $C_{action}$, mesurée à partir de la consigne de couple moteur $C_{Mot}$ et du couple volant $C_{volant}$).

De préférence, la loi de corrélation $L$ est établie sous forme d'une courbe d'interpolation ou d'une courbe de régression par rapport à la série de points de caractérisation $P_1$, $P_2$, ... $P_n$.

Ladite courbe d'interpolation peut être linéaire, polynomiale, ou de toute autre nature appropriée.

Préférentiellement, et tel que cela est illustré sur la figure 1, la loi de corrélation $L$ est obtenue par régression linéaire sur la série de points de caractérisation $P_1$, $P_2$, ... $P_n$, de préférence par la méthode des moindres carrés.

Cette solution permet d'obtenir de façon simple, rapide, et économe en ressources, un modèle de frottement parfaitement valable, amplement satisfaisant pour l'application visée.

En particulier, l'utilisation d'un modèle de type fonction affine (droite), permet d'associer à tout effort d'actionnement $C_{action}$, au moyen d'une formule simple mais néanmoins relativement précise, et en l'occurrence selon une fonction affine croissante, une valeur correspondante (estimée) de frottement $F_{éval}$.

De façon particulièrement préférentielle, l'étape (a) d'acquisition et l'étape (b) de construction de modèle sont rafraîchies itérativement au cours du fonctionnement du mécanisme de direction, de manière à ce que la loi de corrélation $L$ soit redéfinie au fur et à mesure de l'acquisition de nouveaux points de caractérisation $P_1$, $P_2$, ... $P_n$, $P_{n+1}$...

Avantageusement, en prévoyant d'une part une acquisition de points de caractérisation qui soit progressive, c'est-à-dire qui s'étale en plusieurs instants successifs, et qui soit de préférence permanente, c'est-à-dire que ladite acquisition se répète et/ou se complète pendant toute la durée de fonctionnement du mécanisme de direction 1, depuis le (plus récent) démarrage du véhicule, et en ajustant d'autre part la loi de corrélation $L$ en fonction des nouveaux points de caractérisation, qui viennent s'ajouter ou se substituer aux points de caractérisation précédemment acquis, l'invention prend intrinsèquement en considération, sensiblement en temps réel, les évolutions de la situation de vie du mécanisme de direction.

En d'autres termes, en mettant constamment à jour la loi de corrélation $L$, sensiblement en temps réel (sitôt que l'acquisition d'un ou de plusieurs nouveaux points de caractérisation le permet), à partir d'un échantillon sans cesse rafraîchi de points de caractérisation $P_1$, $P_2$, ... $P_n$, le procédé selon l'invention permet un ré-étalonnage permanent et complet du modèle empirique qui reste donc à tout moment fidèlement et finement représentatif des conditions réelles de fonctionnement du véhicule.

A titre d'exemple, on comprendra que, dans une situation de démarrage par temps froid, les frottements seront initialement élevés, et tendront à diminuer si une élévation de température du mécanisme de direction, qui pourra être due notamment au réchauffement de l'atmosphère environnante et/ou à l'échauffement du moteur (de propulsion) du véhicule, améliore la fluidité du lubrifiant utilisé au sein dudit mécanisme de direction.

L'invention permettra avantageusement de prendre en considération de telles évolutions, le nuage de points obtenu dans la première situation (ici de démarrage à froid) étant différent, dans son étendue et/ou sa répartition, de celui obtenu dans la seconde situation (ici de fonctionnement à chaud), ce qui conduit à l'établissement de lois de corrélation, tirées respectivement desdits nuages de points différents, qui ne sont pas identiques dans chacune desdites situations.

De manière générale, la définition du modèle de frottement proposée par l'invention est donc bien plus souple, réactive et polyvalente qu'une définition qui reposerait sur un modèle pré-établi théorique, "rigide" ou "figé", que l'on essaierait de définir, de façon très approximative, à partir d'une seule valeur d'étalonnage.

De préférence, l'acquisition de la série de points de caractérisation est glissante, de telle sorte que, une fois que la série a atteint une taille maximale $n$ prédéterminée, l'acquisition d'un ou de plusieurs nouveau(x) point(s) de

caractérisation $P_{n+1}$, $P_{n+2}$, ... $P_{n+i}$ et l'ajout dudit, ou desdits, point(s) de caractérisation le(s) plus récent(s) $P_{n+1}$, $P_{n+2}$, ... $P_{n+i}$ à la série entraîne l'abandon du nombre correspondant de point(s) de caractérisation le(s) plus ancien(s) $P_1$, $P_2$... $P_i$ de ladite série.

En d'autres termes, le rafraîchissement s'accompagne d'une substitution progressive des nouveaux points de caractérisation $P_{n+1}$, $P_{n+2}$, ... $P_{n+1}$, aux points de caractérisation les plus anciens $P_1$, $P_2$... $P_i$.

On peut ainsi, tout en limitant l'espace de stockage et la puissance de calcul nécessaires au bon déroulement du procédé, conserver, pour la définition du modèle de frottement, uniquement les points de caractérisation les plus récents, et éliminer au contraire de la définition de la loi de corrélation $L$ les points de caractérisation "obsolètes" considérés comme les moins représentatifs car les plus éloignés de l'instant (présent) considéré.

Ce remplacement glissant, de préférence à taille d'échantillon (taille de série) constante, des données empiriques (points de caractérisation) sur la base desquelles se fonde la construction du modèle de frottement permet avantageusement une actualisation efficace et permanente dudit modèle, ce qui en accroît la robustesse et la fiabilité.

De préférence, les points de caractérisation sont acquis lors d'inversions de braquage 15, c'est-à-dire lorsque le conducteur du véhicule change (volontairement) le sens dans lequel il actionne le volant de conduite 3, ce changement ayant pour but et pour effet de passer d'une situation de braquage vers la gauche, dans laquelle le conducteur exerce une force qui tire le volant vers la gauche, à une situation de braquage vers la droite, dans laquelle le conducteur exerce une force qui tire le volant vers la droite, ou inversement.

En effet, toute inversion de braquage 15 provoque un basculement (une inversion) du sens de déplacement des organes (mobiles) de direction.

Or, en pratique, les efforts résistants dus aux frottements internes au mécanisme de direction, qui tendent à s'opposer à la manoeuvre de braquage, sont de signe opposé au signe du déplacement (et plus particulièrement au signe de la vitesse de déplacement) des organes de direction.

Le basculement du sens de manoeuvre de braquage de la direction, et donc le basculement du sens de déplacement des organes de direction, provoque donc quasi-simultanément d'une part la disparition d'une première composante d'effort résistant, attribuable aux frottements qui s'opposaient, avant l'inversion de braquage 15, au déplacement des organes de direction dans le premier sens (par convention, vers la gauche), et d'autre part l'apparition d'une nouvelle (seconde) composante d'effort résistant, également attribuable aux frottements, mais de signe opposé à la première composante d'effort résistant, et qui s'oppose cette fois, après l'inversion de braquage 15, au déplacement des organes de direction dans le second sens (vers la droite) opposé au premier sens.

La présence de frottements, et plus particulièrement l'inversion du sens d'action des frottements lors de l'inversion du sens de braquage 15, est donc à l'origine d'un phénomène d'hystérésis qui se traduit, lors de l'inversion du sens de braquage, par une chute, en valeur absolue, de l'effort résistant, et par conséquent par une chute, en valeur absolue, de l'effort d'assistance $C_{assist}$ qui est délivré par le moteur d'assistance (et plus globalement par une chute de l'effort d'actionnement $C_{action}$ qui est appliqué au mécanisme de direction) pour contrer (et surmonter) ledit effort résistant.

Sur les figures 2 et 3, cette chute de l'effort d'actionnement $C_{action}$ présente une hauteur notée $H$.

Sur la figure 2, on voit nettement que la chute $H$ (en valeur absolue) de l'effort d'actionnement $C_{action}$ coïncide temporellement avec les inversions de braquage 15, telles qu'elles ressortent de la courbe en pointillés qui illustre l'évolution dans le temps de la position angulaire $\theta_{volant}$ du volant de conduite, faisant ainsi apparaître les alternances du sens de rotation dudit volant, lorsque le conducteur braque, dans l'exemple illustré, successivement le volant à droite, puis à gauche.

On notera que, dans l'exemple de la figure 2, la position angulaire $\theta_{volant}$ du volant de conduite, représentative de la configuration de braquage de la direction, est en fait exprimée, de manière équivalente, à partir de la position angulaire de l'arbre 13 du moteur d'assistance 2, qui peut par exemple être renseignée par un capteur idoine, de type resolver.

Dans l'exemple de la figure 2, le rapport de réduction mécanique de la chaîne cinématique qui lie l'arbre 13 du moteur d'assistance au volant de conduite 3 est de l'ordre de 26, et l'échelle d'angle portée en ordonnées correspond à des kilo-degrés ($10^3$ degrés) mécaniques d'arbre moteur. Les va-et-vient de l'arbre moteur illustrés ici alternent entre -3600 degrés (d'angle d'arbre moteur) et +3600 degrés (d'angle d'arbre moteur) environ, ce qui correspond à des déplacements angulaires du volant de conduite de +/- 139 degrés environ.

Selon une possibilité de mise en oeuvre, on pourra détecter les inversions de braquage 15 en évaluant la dérivée temporelle du signal représentatif de l'effort d'actionnement (ou de tout autre signal affecté par le frottement et donc sujet à une chute notable en cas d'inversion de braquage, tel que le signal de consigne de couple moteur $C_{Mot}$) :

$$\frac{\partial C_{action}}{\partial t},$$ puis en comparant la valeur de ladite dérivée temporelle à un seuil de variation $S_{pic}$ prédéterminé, afin de détecter un pic de dérivée, supérieur audit seuil de variation $S_{pic}$.

Un tel pic de dérivée, supérieur audit seuil de variation prédéterminé, signale en effet une transition correspondant à une variation rapide (voire à une quasi-discontinuité) du signal considéré, et plus particulièrement à une chute (un rapprochement de zéro), en valeur absolue, dudit signal considéré, et peut donc signaler une inversion du sens de braquage 15 de la direction.

En pratique, on peut appliquer toute méthode de dérivation permettant de déterminer la variation du signal choisi par unité de temps (c'est-à-dire la pente de la courbe représentative dudit signal), en l'espèce entre deux instants séparés par un intervalle de temps (période d'échantillonnage) prédéterminé suffisamment restreint.

A titre indicatif, la période d'échantillonnage (dite aussi « pas » d'échantillonnage) pourra être comprise entre 0,5 ms et 10 ms.

De préférence, la mesure du frottement $F_{mes\_1}$, $F_{mes\_2}$, ... $F_{mes\_n}$ aux points de caractérisation $P_1$, $P_2$, ... $P_n$ est obtenue à partir de la hauteur de chute $\underline{H}$ d'un signal représentatif de l'effort d'assistance $C_{assist}$ délivré par le moteur d'assistance 2, ou, préférentiellement, d'un signal représentatif d'un effort (couple) d'actionnement $C_{action}$ total correspondant au cumul de l'effort (couple) d'assistance $C_{assist}$ délivré par le moteur d'assistance 2 et de l'effort (couple) manuel $C_{volant}$ exercé par le conducteur sur le volant de conduite 3.

Par simple commodité de description, mais également parce que le signal d'actionnement $C_{action}$ permet une perception plus complète du phénomène de frottement, tel que cela a été expliqué plus haut, on fera préférentiellement, mais non limitativement, référence audit signal d'actionnement $C_{action}$ dans ce qui suit, pour décrire en détail la mesure (expérimentale) du frottement $F_{mes\_1}$, $F_{mes\_2}$, ... $F_{mes\_n}$.

Plus particulièrement, on considèrera que la valeur de frottement que l'on cherche à mesurer est égale, eu égard au phénomène d'hystérésis évoqué plus haut, à la demi-hauteur de chute H/2, c'est-à-dire à la demi-différence entre la valeur d'effort d'actionnement qui suit immédiatement l'inversion de braquage 15 et la valeur d'effort d'actionnement qui précède immédiatement l'inversion de braquage 15, c'est-à-dire (cf. figure 3) : $F_{mes\_i}$ = H/2 = $\Delta C_{action}$ / 2.

En pratique, pour accéder à cette valeur, on peut tout d'abord identifier un instant de début de pic $t_{déb}$ qui correspond à l'instant auquel la dérivée temporelle du signal d'effort d'actionnement $\dfrac{\partial C_{action}}{\partial t}$ (ou, le cas échéant, la dérivée du signal de consigne de couple moteur $C_{Mot}$) passe au-dessus du seuil de variation $S_{pic}$, ainsi qu'un instant de fin de pic $t_{fin}$ qui correspond à l'instant auquel ladite dérivée temporelle du signal d'effort d'actionnement $\dfrac{\partial C_{action}}{\partial t}$ redescend en-dessous dudit seuil de variation $S_{pic}$.

Avantageusement, ceci permettra de caractériser précisément la situation temporelle (par horodatage) de l'inversion de braquage 15 et l'étendue temporelle (durée) de ladite inversion de braquage.

Tel que cela est illustré sur la figure 3, on notera $d_{pic}$ = $t_{fin}$ - $t_{déb}$ la durée de maintien de pic qui sépare l'instant de fin de pic $t_{fin}$ de l'instant de début de pic $t_{déb}$, et pendant laquelle la dérivée temporelle reste supérieure au seuil de variation $S_{pic}$.

Une fois identifiés les instants de début et de fin de pic, on pourra ensuite déterminer, tel que cela est illustré sur la figure 3, quelle était la valeur $C_{action}$(t1), dite « valeur d'effort d'actionnement antérieure à l'inversion de braquage », prise par le signal d'effort d'actionnement à un premier instant de référence t1, qui est égal ou antérieur à l'instant de début de pic $t_{déb}$, ainsi que la valeur $C_{action}$(t2), dite « valeur d'effort d'actionnement postérieure à l'inversion de braquage », prise par le signal d'effort d'actionnement à un second instant de référence t2, qui est égal ou postérieur à l'instant de fin de pic $t_{fin}$, puis évaluer le frottement $F_{mes\_i}$ à partir du calcul de la différence entre la valeur d'effort d'actionnement postérieure à l'inversion de braquage $C_{action}$(t2) et la valeur d'effort d'actionnement antérieure à l'inversion de braquage $C_{action}$(t1), c'est-à-dire :

$$F_{mes\_i} = \Delta C_{action} / 2, \text{ avec } \Delta C_{action} = |C_{action}(t2) - C_{action}(t1)|.$$

Cette valeur de frottement $F_{mes\_i}$, portée en ordonnée sur la figure 1, sera associée, en abscisse, à la valeur d'effort d'actionnement $C_{action\_i}$ telle qu'elle était juste avant l'inversion de braquage 15, c'est-à-dire juste avant la chute. On a donc : $C_{action\_i}$ = $C_{action}$(t1).

Ainsi, pour une inversion de braquage donnée, on acquiert le point de caractérisation suivant : Pi = ($C_{action}$(t1) ; $\Delta C_{action}$ / 2).

Selon une possibilité de mise en oeuvre, on pourra choisir, arbitrairement, de faire coïncider le premier instant de référence tl avec l'instant de début de pic $t_{déb}$ (c'est-à-dire poser tl = $t_{déb}$), et/ou, en complément ou alternativement, choisir de faire coïncider le second instant de référence t2 avec l'instant de fin de pic $t_{fin}$ (c'est-à-dire poser t2 = $t_{fin}$).

Toutefois, selon une seconde possibilité, le premier instant de référence tl est de préférence choisi strictement antérieur à l'instant de début de pic $t_{déb}$ (tl < $t_{déb}$), ledit premier instant de référence précédant ledit instant de début de pic d'une valeur d'avance $\delta1$ (c'est-à-dire : tl = $t_{déb}$ - $\delta1$), et/ou le second instant de référence t2 est choisi strictement postérieur à l'instant de fin de pic (t2 > $t_{fin}$), ledit second instant de référence suivant ledit instant de fin de pic d'une valeur de retard $\delta2$ (c'est-à-dire : t2 = $t_{fin}$ + $\delta2$).

A titre indicatif, la valeur d'avance $\delta1$ est de préférence comprise entre 20 ms et 100 ms, et par exemple sensiblement égale à 50 ms (cinquante millisecondes).

A titre indicatif, la valeur de retard $\delta2$ est de préférence comprise entre 20 ms et 100 ms, et par exemple sensiblement égale à 50 ms (cinquante millisecondes).

En d'autres termes, on élargit de préférence (par rapport à la durée de maintien de pic $d_{pic}$) l'intervalle temporel [t1; t2] sur lequel on calcule la hauteur de chute $\Delta C_{action}$ du signal considéré (ici le signal d'effort d'actionnement), et ce préférentiellement des deux côtés du pic de dérivé, aussi bien en retard qu'en avance.

Cet élargissement de l'intervalle de mesure par rapport à l'intervalle brut défini par les instants de début et de fin de pic, élargissement qui représente de préférence au moins 10 ms (en avance aussi bien qu'en retard), et par exemple préférentiel 50 ms (en avance aussi bien qu'en retard : $\delta1$ = $\delta2$ = 50 ms), permet de s'assurer que la durée écoulée (c'est-à-dire t2-tl) entre le premier instant de référence tl et le second instant de référence t2 est effectivement supérieure ou égale (et le cas échéant tout juste supérieure) à la durée effective de la chute (complète) du signal correspondant l'inversion de braquage 15.

Dans le cas de l'application à l'évaluation du frottement, cela permet de s'assurer que l'on couvre toute la durée de la chute du signal qui est imputable à l'inversion de braquage 15, et donc au frottement.

Ainsi, le procédé conforme à l'invention permet de garantir que l'on mesure bien les valeurs extrêmes du signal d'effort d'actionnement qui correspondent à l'intégralité de la hauteur de chute $\underline{H}$ dudit signal, caractéristique de l'inversion de braquage, sans tronquer une partie de ladite chute.

En outre, les valeurs d'avance $\delta1$ et de retard $\delta2$ restent toutefois relativement inférieures à des seuils d'élargissement maximal prédéterminés, choisis de telle sorte que le premier instant de référence tl et le second instant de référence t2 restent au voisinage temporel immédiat du domaine de la transition (du domaine de la chute liée à l'inversion de braquage), dans des domaines "frontaliers" de la transition, domaines frontaliers dans lesquels la valeur du signal concerné reste quasiment constante par rapport à la valeur qui est prise par ledit signal en limite de transition (les évolutions de ladite valeur dans les domaines frontaliers étant par exemple contenues dans une plage d'amplitude inférieure ou égale à 10 %, à 5 %, voire inférieure ou égale à 1 % de la hauteur de chute).

En définitive, le procédé selon l'invention permet donc de mesurer sensiblement une hauteur de chute $\underline{H}$ qui correspond à toute la contribution propre au frottement et rien qu'à la contribution propre au frottement.

A titre illustratif, dans l'exemple de la figure 2, on observe une hauteur de chute $\Delta C_{action}$ = |$C_{action}$(t2)- $C_{action}$(t1)| de l'ordre de 15 000 N - 8 200 N = 6 800 N, ce qui correspond à une valeur de frottement de l'ordre de 6 800 N/2 = 3 400 N (soient 3,4 kN).

En retenant comme valeur représentative de l'effort d'actionnement la valeur |$C_{action}$(t1)| de 15 000 N (soient 15 kN) qui précédait la chute, le point de caractérisation correspondant, qui contribuerait à la construction de la loi de corrélation $\underline{L}$, aurait pour coordonnées (15 000 N, 3 400 N).

On notera au passage qu'un tel point de caractérisation serait en l'espèce parfaitement cohérent avec le nuage de points déjà représenté sur la figure 1, et effectivement très proche de la droite de régression représentant la loi de corrélation $\underline{L}$ sur cette même figure 1. En l'espèce, ledit point de caractérisation se situe en effet sensiblement dans le prolongement de ladite droite de régression $\underline{L}$, considérée au-delà du seul domaine représenté sur la figure 1, et en l'espèce prolongée jusqu'à l'abscisse (15 kN) correspondant à celle dudit point de caractérisation.

De préférence la série de points de caractérisation contient entre d'une part au moins 5 points de caractérisation, voire au moins 10 points de caractérisation $P_1$, $P_2$, ... $P_n$ et d'autre part 50, voire 100 points de caractérisation $P_1$, $P_2$, ... $P_n$, c'est-à-dire que l'on a de préférence $5 \leq n \leq 100$, voire $5 \leq n \leq 50$, ou $10 \leq n \leq 100$, voire $10 \leq n < 50$.

L'objectif est notamment de définir la taille $\underline{n}$ de la série, c'est-à-dire le nombre de points de caractérisation $P_1$, $P_2$, ... $P_n$ constitutif de la série complète, en trouvant un compromis adapté entre d'une part une taille $\underline{n}$ suffisamment petite, qui permet d'économiser de la mémoire et de la puissance de calcul, mais également de limiter la durée nécessaire à l'acquisition de ladite série, et d'autre part une taille $\underline{n}$ suffisamment grande pour obtenir un modèle représentatif.

A titre indicatif, la taille $\underline{n}$ de la série pourra être choisie de manière à ce que la durée d'acquisition (complète) de ladite série soit, dans les conditions prévisibles ou constatées d'utilisation du véhicule, sensiblement comprise entre une minute et cinq minutes, voire dix minutes, et plus particulièrement comprise entre une minute et trois minutes.

On pourra ainsi disposer rapidement d'un modèle de frottement représentatif, peu après le démarrage du véhicule, et donc d'une estimation fiable des frottements en toutes circonstances, y compris pour des trajets courts.

Selon une variante possible de mise en oeuvre, la taille $\underline{n}$ de la série de points de caractérisation pourra être modifiée (adaptée) de façon dynamique au cours de la vie du mécanisme de direction 1, et plus globalement au cours de la vie du véhicule, en fonction de la détection de certaines situations de vie (prédéterminées) du véhicule équipé dudit mécanisme de direction, et plus particulièrement en fonction de l'historique de certains paramètres, ou d'une combinaison de certains paramètres, tels que la vitesse du véhicule, l'amplitude angulaire (le cas échéant cumulée) des manoeuvres du volant, ou l'intensité du couple volant et/ou du couple d'assistance (ou, plus globalement, de l'effort d'actionnement).

En effet, on comprendra par exemple que dans une situation de conduite sur une route sinueuse, à faible vitesse, et impliquant des mouvements de volant de grande amplitude et des efforts d'actionnement relativement élevés, les inversions de braquage seront nombreuses, et donc l'acquisition des points de caractérisation rapide, même pour une taille importante de série (par exemple supérieure ou égale à 30 points, voire à 50 points).

Dans les faits, sur une route sinueuse (i.e. comprenant des virages), les inventeurs on constaté que l'on pouvait ainsi acquérir environ quatre à cinq points de caractérisation par minute.

En pareille situation, on pourra donc conserver une série de relativement grande taille, et malgré cela obtenir, et faire évoluer, relativement rapidement un modèle de frottement réaliste, dont on sera ainsi assuré, par exemple, qu'il prendra notamment en considération les effets d'un échauffement rapide du mécanisme de direction (induit notamment par les effets de friction dans ledit mécanisme de direction et/ou dans les freins voisins, ou bien encore par les déperditions thermiques du moteur servant à propulser du véhicule, sous l'effet par exemple des hausses périodique de régime liées aux reprises d'accélération).

A l'inverse, dans une situation de conduite régulière sur autoroute, à vitesse élevée, avec très peu de corrections significatives de trajectoire et très peu de changements de voie de circulation, corrections ou changements qui mettent de surcroît en oeuvre des efforts d'actionnement relativement faibles, les inversions de braquage, et donc les acquisitions de points de caractérisation, seront relativement peu fréquentes.

En outre, la régularité des conditions d'utilisation dans une telle situation de conduite sur autoroute permettra d'obtenir un modèle de frottement réaliste avec relativement peu de points de caractérisation, situés au voisinage immédiat desdites conditions d'utilisation (typiquement dans une plage d'efforts d'actionnement réduite, correspondant aux efforts d'actionnement mis en jeu pour simplement maintenir l'alignement du véhicule sur sa voie).

Dans cette seconde situation, on pourra donc réduire la taille de la série, afin notamment de réduire le temps nécessaire à son acquisition complète (puis à son rafraîchissement).

Quelles que soient les évolutions de la taille de la série, celle-ci restera bien entendu supérieure à 2 points, à 3 points, et de préférence à 5 points, voire à 10 points, afin de conserver une pluralité de points de caractérisation, en nombre suffisant pour former un échantillon représentatif du comportement du mécanisme de direction 1 à l'instant considéré.

A ce titre, la taille (nombre de points) de la série, que ce soit lors du choix initial ou lors d'adaptations ultérieures, restera de préférence contenue dans l'intervalle [5 ; 100], voire [5 ; 50] susmentionné.

De préférence, le procédé conforme à l'invention comprend, une fois le modèle de frottement empirique construit, une étape (c) d'estimation de frottement, au cours de laquelle on mesure, à un instant considéré $\underline{t}$, la valeur $C_{action}(t)$ prise par l'effort d'assistance (c'est-à-dire par la première variable, d'entrée, ici l'effort d'actionnement $C_{action}$), et l'on en déduit, par extrapolation, en utilisant la loi de corrélation $\underline{L}$ en vigueur à l'instant considéré (tel que cela est illustré par les flèches sur la figure 1), une estimation $F_{éval}$ de la valeur du frottement qui affecte le mécanisme de direction 1 audit instant considéré.

Avantageusement, la connaissance de la loi de corrélation $\underline{L}$ tirée de la série de points de caractérisation permet de généraliser le modèle de frottement au-delà des seuls points de caractérisation, et ainsi d'estimer de façon fiable et réaliste la valeur du frottement à partir de toute valeur prise par la première variable (par l'effort d'actionnement), alors même que ladite valeur de la première variable (de l'effort d'actionnement) est distincte du nuage de points, c'est-à-dire ne correspond pas nécessairement de façon stricte à l'abscisse d'un point de caractérisation appartenant au nuage qui a servi à établir la loi de corrélation $\underline{L}$.

A ce titre, la courbe de la loi de corrélation $\underline{L}$ restant en permanence encadrée, et donc guidée, par construction, par les points de caractérisation $P_1$, $P_2$, ... $P_n$ expérimentaux, une telle extrapolation du modèle à des points de fonctionnement autres que les points de caractérisation, et notamment à des points de fonctionnement situés à des abscisses intermédiaires entre ces points de caractérisation, reste fiable.

Tel que cela est illustré sur les figures 1 et 3, l'invention permet donc, en utilisant la loi de corrélation $\underline{L}$ construite à partir des points de caractérisation, d'associer ensuite, à tout instant $\underline{t}$ où l'on souhaite obtenir une information concernant les frottements qui affectent le mécanisme de direction, une évaluation $F_{éval}$ desdits frottements (donnée de sortie, correspondant à l'ordonnée de la loi de corrélation) à tout état de contrainte du mécanisme de direction (donnée d'entrée, correspondant à l'abscisse de la loi de corrélation), et plus particulièrement à toute valeur, mesurée ou évaluée, de l'effort d'actionnement $C_{action}(t)$.

L'évaluation du frottement $F_{éval}$, résultant de l'utilisation du modèle de frottement pourra être ensuite exploitée dans tout procédé de gestion du mécanisme de direction, ou plus globalement dans tout procédé de gestion du véhicule, par exemple en permettant une compensation dudit frottement, afin d'améliorer le confort de la conduite ou le ressenti tactile du mécanisme de direction, tel que le conducteur le perçoit à travers le volant de conduite 3.

Bien entendu, les fonctions assignées au procédé selon l'invention pourront être réalisées par des modules de calcul idoines, et plus particulièrement par un module d'application de loi d'assistance 12, un module d'acquisition (de points de caractérisation) 16, un module de construction de modèle (module de calcul de la loi de corrélation) 17, et un module d'évaluation de frottement 18 (appliquant la loi de corrélation L ainsi définie pour estimer, à tout moment et pour toute valeur quelconque de l'effort d'actionnement $C_{action}(t)$, le frottement $F_{éval}(t)$ correspondant).

Chacun des modules susmentionnés pourra être formé par un circuit électronique, une carte électronique, un calculateur (ordinateur), un automate programmable, ou tout autre dispositif équivalent.

Chacun des modules susmentionnés pourra présenter une structure de commande physique, liée au câblage de ses composants électroniques, et/ou, de préférence, une structure de commande virtuelle, définie par une programmation informatique.

Bien entendu, l'invention concerne également en tant que tel tout support de données lisible par un ordinateur et contenant des éléments de code de programme informatique permettant d'exécuter le procédé conforme à l'invention lorsque ledit support est lu par un ordinateur.

Elle concerne également un système de direction assistée comprenant un mécanisme de direction assistée 1 piloté par un module de gestion incluant tout ou partie des modules susmentionnés, et de ce fait capable de mettre en oeuvre le procédé selon l'invention.

Elle concerne en outre un véhicule automobile, notamment à roues directrices 9, 10, éventuellement motrices, équipé d'un tel système de direction assistée.

On notera enfin que le procédé conforme à l'invention, qui exploite des signaux généralement disponibles au sein des directions assistée, peut être facilement généralisé à toutes les directions assistées, y compris en rattrapage sur de nombreuses directions assistées déjà existantes, par une simple reprogrammation de leur calculateur.

Bien entendu, l'invention n'est par ailleurs nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents, sous condition qu'ils sont comprises dans la portée des revendications adjointes.

**Revendications**

1.  Procédé d'évaluation des frottements dans un mécanisme de direction assistée (1) équipé d'un moteur d'assistance (2) destiné à fournir un effort d'assistance pour manoeuvrer ledit mécanisme de direction, ledit procédé étant **caractérisé en ce qu'**il comporte une étape (a) d'acquisition d'une série de points de caractérisation, au cours de laquelle on mesure, pour plusieurs valeurs différentes prises successivement par l'effort d'assistance au cours du fonctionnement du mécanisme de direction, les valeurs de frottement correspondantes, afin d'obtenir empiriquement une série de points de caractérisation ($P_1$, $P_2$, ... $P_n$) distincts qui associent chacun à une valeur mesurée représentative de l'effort d'assistance ($C_{action\_1}$, $C_{action\_2}$, ... $C_{action\_n}$) une valeur mesurée de frottement ($F_{mes\_1}$, $F_{mes\_2}$, ... $F_{mes\_n}$), puis une étape (b) de construction d'un modèle de frottement empirique, au cours de laquelle on établit une loi de corrélation (L) entre les points de caractérisation ($P_1$, $P_2$, ... $P_n$) constitutifs de la série de points de caractérisation, à partir du nuage de points formé par ladite série desdits points de caractérisation.

2.  Procédé selon la revendication 1 **caractérisé en ce que** l'étape (a) d'acquisition et l'étape (b) de construction de modèle sont rafraîchies itérativement au cours du fonctionnement du mécanisme de direction, de manière à ce que la loi de corrélation (L) soit redéfinie au fur et à mesure de l'acquisition de nouveaux points de caractérisation ($P_1$, $P_2$, ... $P_n$, $P_{n+1}$...).

3.  Procédé selon la revendication 1 ou 2 **caractérisé en ce que** l'acquisition de la série de points de caractérisation est glissante, de telle sorte que, une fois que la série a atteint une taille maximale (n) prédéterminée, l'acquisition d'un ou de plusieurs nouveau(x) point(s) de caractérisation ($P_{n+1}$, $P_{n+2}$, ... $P_{n+i}$) et l'ajout dudit, ou desdits, point(s) de caractérisation le(s) plus récent(s) à la série entraîne l'abandon du nombre correspondant de point(s) de caractérisation le(s) plus ancien(s) ($P_1$, $P_2$... $P_i$) de ladite série.

4.  Procédé selon l'une des revendications précédentes **caractérisé en ce que** la série contient entre d'une part au moins 5 points de caractérisation, voire au moins 10 points de caractérisation ($P_1$, $P_2$, ... $P_n$) et d'autre part 50, voire 100 points de caractérisation.

5.  Procédé selon l'une des revendications précédentes **caractérisé en ce que** la taille (n) de la série de points de caractérisation est modifiée de façon dynamique au cours de la vie du mécanisme de direction (1), en fonction de la détection de certaines situations de vie prédéterminées du véhicule équipé dudit mécanisme de direction.

6.  Procédé selon l'une des revendications précédentes **caractérisé en ce que** la loi de corrélation (L) est établie sous forme d'une courbe d'interpolation ou d'une courbe de régression par rapport à la série de points de caractérisation ($P_1$, $P_2$, ... Pn).

7. Procédé selon l'une des revendications précédentes **caractérisé en ce que** la loi de corrélation (L) est obtenue par régression linéaire sur la série de points de caractérisation ($P_1$, $P_2$, ... $P_n$), de préférence par la méthode des moindres carrés.

8. Procédé selon l'une des revendications précédentes **caractérisé en ce que** la valeur mesurée représentative de l'effort d'assistance est choisie parmi : la valeur de la consigne de couple moteur ($C_{Mot}$) qui est appliquée au moteur d'assistance (2), la valeur mesurée du couple électromagnétique d'assistance ($C_{assist}$) effectivement exercé par l'arbre de sortie (13) du moteur d'assistance, ou la valeur mesurée du couple d'actionnement total ($C_{action}$) qui correspond au cumul d'une part du couple d'assistance ($C_{assist}$) délivré par le moteur d'assistance (2) et d'autre part du couple volant ($C_{volant}$) qui est exercé par le conducteur sur le volant de conduite (3).

9. Procédé selon l'une des revendications précédentes **caractérisé en ce que** les points de caractérisation ($P_1$, $P_2$, ... $P_n$) sont acquis lors d'inversions de braquage (15) et **en ce que** la mesure du frottement ($F_{mes\_1}$, $F_{mes\_2}$, ... $F_{mes\_n}$) aux points de caractérisation ($P_1$, $P_2$, ... $P_n$) est obtenue à partir de la hauteur de chute (H) d'un signal représentatif de l'effort d'assistance ($C_{assist}$) délivré par le moteur d'assistance (2), ou, préférentiellement, d'un signal représentatif d'un effort d'actionnement ($C_{action}$) total correspondant au cumul de l'effort d'assistance ($C_{assist}$) délivré par le moteur d'assistance (2) et de l'effort manuel ($C_{volant}$) exercé par le conducteur sur le volant de conduite (3).

10. Procédé selon l'une des revendications précédentes **caractérisé en ce qu'**il comprend une étape (c) d'estimation de frottement, au cours de laquelle on mesure, à un instant considéré (t), la valeur prise par l'effort d'assistance ($C_{action}$(t)), et l'on en déduit, par extrapolation, en utilisant la loi de corrélation (L) en vigueur à l'instant considéré, une estimation ($F_{éval}$) de la valeur du frottement qui affecte le mécanisme de direction (1) audit instant considéré.

**Patentansprüche**

1. Verfahren zum Bewerten der Reibungen in einem Servolenkungsmechanismus (1), der mit einem Unterstützungsmotor (2) ausgestattet ist, der dazu bestimmt ist, eine Unterstützungskraft zum Manövrieren des Lenkungsmechanismus zu liefern, wobei das Verfahren **dadurch gekennzeichnet ist, dass** es einen Schritt (a) des Erfassens einer Reihe von Charakterisierungspunkten umfasst, in dessen Verlauf man für mehrere unterschiedliche Werte, die die Unterstützungskraft im Laufe des Funktionierens des Lenkungsmechanismus nacheinander annimmt, die entsprechenden Reibungswerte misst, um empirisch eine Reihe getrennter Charakterisierungspunkte ($P_1$, $P_2$, ... $P_n$) zu erhalten, die jeweils einen Messwert, der für die Unterstützungskraft repräsentativ ist ($C_{action\_1}$, $C_{action\_2}$, ... $C_{action\_n}$), mit einem gemessenen Reibungswert ($F_{mes\_1}$, $F_{mes\_2}$, ... $F_{mes\_n}$) assoziieren, dann einen Schritt (b) des Aufbauens eines empirischen Reibungsmodells, in dessen Verlauf man ein Korrelationsgesetz (L) zwischen den Charakterisierungspunkten ($P_1$, $P_2$, ... $P_n$), die die Reihe von Charakterisierungspunkten bilden, ausgehend von der Punktwolke, die von der Reihe der Charakterisierungspunkte gebildet wird, ermittelt.

2. Verfahren nach Anspruch 1, **dadurch gekennzeichnet, dass** der Erfassungsschritt (a) und der Modellaufbauschritt (b) iterativ im Laufe des Funktionierens des Lenkungsmechanismus aufgefrischt werden, so dass das Korrelationsgesetz (L) im Laufe der Erfassung neuer Charakterisierungspunkte ($P_1$, $P_2$, ... $P_n$, $P_{n+1}$) neu definiert wird.

3. Verfahren nach Anspruch 1 oder 2, **dadurch gekennzeichnet, dass** das Erfassen der Reihe von Charakterisierungspunkten derart gleitend ist, dass, sobald die Reihe eine vorbestimmte maximale Größe (n) erreicht hat, das Erfassen eines neuen Charakterisierungspunkts oder mehrerer neuer /Charakterisierungspunkte ($P_{n+1}$, $P_{n+2}$, ... $P_{n+i}$) und das Hinzufügen des oder der Charakterisierungspunkts/Charakterisierungspunkte, der der jüngste/die die jüngsten der Reihe ist/sind, das Aufgeben der entsprechenden Anzahl des/der ältesten Charakterisierungspunkts/Charakterisierungspunkte ($P_1$, $P_2$, ... $P_i$) der Reihe nach sich zieht.

4. Verfahren nach einem der vorhergehenden Ansprüche, **dadurch gekennzeichnet, dass** die Reihe einerseits mindestens 5 Charakterisierungspunkte, sogar mindestens 10 Charakterisierungspunkte ($P_1$, $P_2$, ... $P_n$) und andererseits 50, sogar 100 Charakterisierungspunkte enthält.

5. Verfahren nach einem der vorhergehenden Ansprüche, **dadurch gekennzeichnet, dass** die Größe (n) der Reihe von Charakterisierungspunkten dynamisch im Laufe der Lebensdauer des Lenkungsmechanismus (1) in Abhängigkeit von dem Erfassen gewisser vorbestimmter Lebenssituationen des Fahrzeugs, das mit dem Lenkungsmechanismus ausgestattet ist, geändert wird.

**6.** Verfahren nach einem der vorhergehenden Ansprüche, **dadurch gekennzeichnet, dass** das Korrelationsgesetz (L) in Form einer Interpolationskurve oder einer Regressionskurve in Bezug auf die Reihe von Charakterisierungspunkten ($P_1$, $P_2$, ... $P_n$) ermittelt wird.

**7.** Verfahren nach einem der vorhergehenden Ansprüche, **dadurch gekennzeichnet, dass** das Korrelationsgesetz (L) durch lineare Regression auf der Reihe von Charakterisierungspunkten ($P_1$, $P_2$, ... $P_n$) bevorzugt anhand der Methode der kleinsten Quadrate erhalten wird.

**8.** Verfahren nach einem der vorhergehenden Ansprüche, **dadurch gekennzeichnet, dass** der Messwert, der für die Unterstützungskraft repräsentativ ist, ausgewählt wird aus: dem Sollwert des Motordrehmoments ($C_{Mot}$), der auf den Unterstützungsmotor (2) angewandt wird, dem Messwert des elektromagnetischen Unterstützungsdrehmoments ($C_{assist}$), das tatsächlich von der Ausgangswelle (13) des Unterstützungsmotors ausgeübt wird, oder dem Messwert des Betätigungsgesamtdrehmoments ($C_{action}$), das der Summe eines Teils des Unterstützungsdrehmoments ($C_{assist}$), das von dem Unterstützungsmotor (2) geliefert wird, und andererseits dem Lenkraddrehmoment ($C_{volant}$), das von den Fahrer auf das Fahrlenkrad (3) ausgeübt wird, entspricht.

**9.** Verfahren nach einem der vorhergehenden Ansprüche, **dadurch gekennzeichnet, dass** die Charakterisierungspunkte ($P_1$, $P_2$, ... $P_n$) bei Einschlagumkehrungen (15) erfasst werden, und dadurch, dass die Messung der Reibung ($F_{mes\_1}$, $F_{mes\_2}$, ... $F_{mes\_n}$) an den Charakterisierungspunkten ($P_1$, $P_2$, ... $P_n$) ausgehend von der Fallhöhe (H) eines Signals, das für die Unterstützungskraft ($C_{assist}$), die von dem Unterstützungsmotor (2) geliefert wird, repräsentativ ist, oder, bevorzugt, einem Signal, das für eine Betätigungsgesamtkraft ($C_{action}$), die der Summe der Unterstützungskraft ($C_{assist}$), die von dem Unterstützungsmotor (2) geliefert wird, und der manuellen Kraft ($C_{volant}$), die von dem Fahrer auf das Fahrlenkrad (3) ausgeübt wird, entspricht, erhalten wird.

**10.** Verfahren nach einem der vorhergehenden Ansprüche, **dadurch gekennzeichnet, dass** es einen Reibungsschätzungsschritt (c) umfasst, in dessen Verlauf man in einem betrachteten Augenblick (t) den Wert, den die Unterstützungskraft ($C_{action}(t)$) annimmt, misst, und dass man daraus durch Extrapolation unter Verwenden des Korrelationsgesetzes (L), das in dem betrachteten Augenblick existiert, eine Schätzung ($F_{éval}$) des Reibungswerts, der auf den Lenkungsmechanismus (1) in dem betrachteten Augenblick einwirkt, ableitet.

## Claims

**1.** A method for evaluating the frictions in a power steering mechanism (1) equipped with an assist motor (2) intended to provide an assistance force for maneuvering said steering mechanism, said method being **characterized in that** it includes a step (a) of acquiring a series of characterization points, during which corresponding friction values are measured for several different values taken successively by the assistance force during the operation of the steering mechanism, so as to empirically obtain a series of distinct characterization points ($P_1$, $P_2$, ... $P_n$) each associating a measured friction value ($F_{mes\_1}$, $F_{mes\_2}$, ... $F_{mes\_n}$) to a measured value representative of the assistance force ($C_{action\_1}$, $C_{action\_2}$, ... $C_{action\_n}$), then a step (b) of constructing an empirical friction model, during which a correlation law (L) is established between the characterization points ($P_1$, $P_2$, ... $P_n$) constitutive of the series of characterization points, from the scatter chart formed by said series of said characterization points.

**2.** The method according to claim 1, **characterized in that** the acquisition step (a) and the model construction step (b) are refreshed in an iterative manner during the operation of the steering mechanism, so that the correlation law (L) is redefined as new characterization points ($P_1$, $P_2$, ... $P_n$, $P_{n+1}$ ...) are acquired.

**3.** The method according to claim 1 or 2, **characterized in that** the acquisition of the series of characterization points is a rolling acquisition, so that, once the series has reached a predetermined maximum size (n), acquiring one or several new characterization point(s) ($P_{n+1}$, $P_{n+2}$, ... $P_{n+i}$) and adding said most recent characterization point(s) to the series causes withdrawing a corresponding number of the earliest characterization point(s) ($P_1$, $P_2$, ... $P_i$) from said series.

**4.** The method according to any of the preceding claims, **characterized in that** the series contains between at least 5 characterization points, or even at least 10 characterization points ($P_1$, $P_2$, ...$P_n$) on the one hand, and 50, or even 100 characterization points, on the other hand.

5. The method according to any of the preceding claims, **characterized in that** the size (n) of the series of characterization points is dynamically modified during the service life of the steering mechanism (1), depending on the detection of certain predetermined life situations of the vehicle equipped with said steering mechanism.

6. The method according to any of the preceding claims, **characterized in that** the correlation law (L) is established in the form of an interpolation curve or a regression curve with reference to the series of characterization points ($P_1$, $P_2$, ... $P_n$).

7. The method according to any of the preceding claims, **characterized in that** the correlation law (L) is obtained by linear regression on the series of characterization points ($P_1$, $P_2$, ... $P_n$), preferably by least squares method.

8. The method according to any of the preceding claims, **characterized in that** the measured value representative of the assistance force is chosen among: the value of the motor torque ($C_{Mot}$) setpoint which is applied to the assist motor (2), the measured value of the electromagnetic assist torque ($C_{assist}$) that is actually exerted by the output shaft (13) of the assist motor, or the measured value of the total actuation torque ($C_{action}$) which corresponds to the sum on the one hand of the assist torque ($C_{assist}$) output by the assist motor (2) and on the other hand of the steering wheel torque ($C_{volant}$) which is exerted by the driver on the steering wheel (3).

9. The method according to any of the preceding claims, **characterized in that** the characterization points ($P_1$, $P_2$, ... $P_n$) are acquired during steering reversals (15) and **in that** the measurement of the friction ($F_{mes\_1}$, $F_{mes\_2}$, ... $F_{mes\_n}$) at the characterization points ($P_1$, $P_2$, ... $P_n$) is obtained from the drop height (H) of a signal representative of the assistance force ($C_{assist}$) output by the assist motor (2), or, preferably, of a signal representative of a total actuation force ($C_{action}$) corresponding to the sum of the assistance force ($C_{assist}$) output by the assist motor (2) and of the manual force ($C_{volant}$) exerted by the driver on the steering wheel (3).

10. The method according to any of the preceding claims, **characterized in that** it comprises a friction estimation step (c), comprising measuring, at a considered instant (t), the value taken by the assistance force ($C_{action}(t)$), and deducing, by extrapolation, and by using the correlation law (L) that is applicable at the considered instant, an estimate ($F_{éval}$) of the value of the friction which affects the steering mechanism (1) at said considered instant.

Fig. 1

Fig. 2

Fig. 3

Fig. 4

**EP 3 120 124 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009133534 A
- DE 102008021848
- DE 10206474
- EP 2239180 A